(19) **Europäisches Patentamt**
**European Patent Office**
**Office européen des brevets**

(11) **EP 1 157 287 B1**

(12) **EUROPÄISCHE PATENTSCHRIFT**

(45) Veröffentlichungstag und Bekanntmachung des Hinweises auf die Patenterteilung:
**11.02.2009 Patentblatt 2009/07**

(21) Anmeldenummer: **00993646.9**

(22) Anmeldetag: **01.12.2000**

(51) Int Cl.:
*G01S 13/93* *(2006.01)*  *G01S 13/53* *(2006.01)*

(86) Internationale Anmeldenummer:
**PCT/DE2000/004275**

(87) Internationale Veröffentlichungsnummer:
**WO 2001/048512 (05.07.2001 Gazette 2001/27)**

(54) **VERFAHREN UND VORRICHTUNG ZUR ERFASSUNG UND AUSWERTUNG VON OBJEKTEN IM UMGEBUNGSBEREICH EINES FAHRZEUGES**

METHOD AND DEVICE FOR DETECTING AND EVALUATING OBJECTS IN THE VICINITY OF A MOTOR VEHICLE

PROCEDE ET DISPOSITIF POUR DETECTER ET EVALUER DES OBJETS DANS LA ZONE ENVIRONNANTE D'UN VEHICULE

(84) Benannte Vertragsstaaten:
**DE GB IT**

(30) Priorität: **24.12.1999 DE 19963006**

(43) Veröffentlichungstag der Anmeldung:
**28.11.2001 Patentblatt 2001/48**

(73) Patentinhaber: **ROBERT BOSCH GMBH 70442 Stuttgart (DE)**

(72) Erfinder: **BROSCHE, Thomas 70195 Stuttgart (DE)**

(56) Entgegenhaltungen:
**WO-A-98/00728** **US-A- 4 739 331**
**US-A- 5 977 905**

**Beschreibung**

Stand der Technik

Die Erfindung betrifft ein Verfahren und eine Vorrichtung zur Erfassung und Auswertung von Objekten im Umgebungsbereich eines Fahrzeuges mit Hilfe eines Radarsensors nach dem Oberbegriff des Verfahrens- und des Vorrichtungsanspruchs.

Es ist beispielsweise aus der DE 44 42 189 A1 bekannt, dass bei einem System zur Abstandsmessung im Umgebungsbereich von Kraftfahrzeugen Sensoren mit Sende- und Empfangseinheiten zugleich zum Senden und Empfangen von Informationen verwendet werden. Unter Zuhilfenahme der Abstandsmessung können hier passive Schutzmaßnahmen für das Fahrzeug, beispielsweise bei einem Front-, Seiten- oder Heckaufprall aktiviert werden. Mit einem Austausch der erfassten Informationen kann zum Beispiel eine Beurteilung von Verkehrssituationen zur Aktivierung entsprechender Auslösesysteme durchgeführt werden.

Es ist darüber hinaus für sich gesehen allgemein bekannt, dass eine Abstandsmessung mit einem sogenannten Pulsradar vorgenommen werden kann, bei dem ein Trägerpuls mit einer rechteckförmigen Umhüllung einer elektromagnetischen Schwingung, z.B. im Gigahertzbereich, ausgesendet wird. Dieser Trägerpuls wird am Zielobjekt reflektiert und aus der Zeit vom Aussenden des Impulses und dem Eintreffen der reflektierten Strahlung kann die Zielentfernung und mit Einschränkungen unter Ausnutzung des Dopplereffekts auch die Relativgeschwindigkeit des Zielobjekts leicht bestimmt werden. Ein solches Messprinzip ist beispielsweise in dem Fachbuch A. Ludloff, "Handbuch Radar und Radarsignalverarbeitung", Seiten 2-21 bis 2-44, Vieweg Verlag, 1993 beschrieben.

Der prinzipielle Aufbau eines solchen bekannten Radarsensors ist so gestaltet, dass die am jeweiligen Zielobjekt reflektierten Radarpulse über Antennen in einen Empfänger gelangen und dort mit den von der Pulserzeugung bereitgestellten zeitlich verzögerten Pulsen gemischt werden. Die Ausgangssignale der Empfänger werden nach einer Tiefpassfilterung und einer Analog/Digital-Wandlung einer Auswerteeinheit zugeführt.

Für die sichere Ansteuerung der eingangs erwähnten Insassenschutzsysteme in einem Kraftfahrzeug werden in der Regel eine Vielzahl von Radarsensoren für die einzelnen Konfliktsituationen im Umgebungsbereich des Kraftfahrzeuges benötigt. Beispielsweise ist eine Kollisionsfrüherkennung (Precrasherkennung) notwendig um eine vorzeitige Erfassung eines Objekts zu ermöglichen, welches bei einer Kollision eine Gefahr für die Fahrzeuginsassen darstellt. Hierdurch sollte es möglich sein, Schutzsysteme wie Airbag, Gurtstraffer oder Sidebag rechtzeitig zu aktivieren, um dadurch die größte Schutzwirkung zu erzielen.

Für eine sachgemäße Auslösung dieser Sicherheitssysteme im Kraftfahrzeug ist die Kenntnis der Relativgeschwindigkeit zwischen dem eigenen Kraftfahrzeug und einem oder mehreren Zielen (z.B. vorausfahrende Fahrzeuge, Hindernisse) vor und bei einer voraussichtlich zu erwartenden Kollision und der zu erwartende Zeitpunkt der Kollision von großer Bedeutung.

Mit einem eingangs erwähnten Radarsensor lassen sich in an sich bekannter Weise Verfahren durchführen, beispielsweise mit einem Puls- oder einem sog. FMCW-Radarsensor, die eine Erfassung und Auswertung der Relativgeschwindigkeit erlauben. Ein solches FMCW-Radar ist beispielsweise in der EP 0 685 930 A1 beschrieben.

Es können beispielsweise an aufeinanderfolgenden Zeitpunkten Abstandswerte gemessen und nach der Zeit abgeleitet werden, wodurch man so die Werte für die momentane Relativgeschwindigkeit zwischen dem Ziel und dem Radarsensor erhält. Durch eine zweifache Ableitung der Abstandswerte kann man auch die Werte für die Beschleunigung relativ zum Ziel erhalten. Mit einem anderen für sich gesehen bekannten Verfahren kann die Differenzfrequenz zwischen der gesendeten Oszillatorfrequenz des Radarsensors und dem vom Ziel reflektierten und empfangenen Signal erzeugt und die sog. Dopplerfrequenz ausgewertet werden.

Aus den so gemessenen Werten kann die Zeit bis zur Kollision und auch, insbesondere bei der Verwendung mehrerer räumlich verteilter Sensoren, die zur Front des Fahrzeugs orthogonalen Komponenten von Relativgeschwindigkeit oder Beschleunigung und der Ort der Kollision berechnet werden. Mit den Momentanwerten der Beschleunigung können dann die entsprechenden Werte für den Zeitpunkt der Kollision extrapoliert werden.

Wichtig ist in diesem Zusammenhang eine hohe Genauigkeit der Messung, insbesondere bei Zielen mit geringem Reflexionsquerschnitt und bei hohen Störsignalanteilen im für die jeweilige Anwendung (z.B. Auslösung der Gurtstraffer oder Umschaltung der Stufen des Airbags) auszuwertenden Geschwindigkeitsbereich. Bisherige Messverfahren gehen dabei von einer konstanten Länge des Erfassungsbereichs im Überwachungsbereich und/oder einem konstanten Abstand dieses Bereichs zum Radarsensor aus.

Aus der WO 98/00728 ist ein Kollisionswarnsystem für Kraftfahrzeuge bekannt, das ein Objektdetektionssystem mit einer Vielzahl an Sensoren, die Objekte in allen Richtungen um das Fahrzeug herum wahrnehmen können, aufweist, wobei jeder einzelne Sensor ein vorbestimmtes Sichtfeld aufweist, in dem der Sensor Objekte detektieren kann und einen augenblicklichen Sichtbereich aufweist, wobei wenn in diesem Sichtbereich Objekte detektiert werden, ein Objektsignal ausgegeben wird. In Abhängigkeit der Fahrzeugaktion, die mittels einer Fahrzeugaktionserkennungseinrichtung erkannt werden, wird ein interessierender Bereich bestimmt, in dem erkannte Objekte ein Signal erzeugen, die ein interessierendes Objekt signalisieren, wobei der interessierende Bereich durch die Fahrzeugaktionserkennungseinrichtung gesteuert wird. Die Fahrzeugaktionserkennungseinrichtung steuert weiterhin die Sensoren derart, dass die augenblicklichen Sichtbereiche der Sensoren gemeinsam das vorbestimmte Sichtfeld abdecken. In Abhängigkeit des Signals, das ein interessierendes Objekt signalisiert, wird entschieden, ob ein Kollisionswarnungssignal ausgegeben werden soll.

Die US 4,739,331 zeigt eine Dauerstrichradar-Anordnung, mit der der dynamische Bereich eines Radarempfängers verbessert wird, indem dieser mehrere Empfangkanäle aufweist, wobei jeder Empfangskanal einen kleinen Teil der Sendebandbreite aufweist, mit dem ein frequenzmoduliertes, sägezahnförmiges Sendesignal einer einzigen Sendeantenne enpfangen wird. Die Ausgangsignale der einzelnen Empfangskanäle werden zu einem gemeinsamen Signal der Echosignale zusammengesetzt.

Aus der US 5,977,905 ist eine Radareinrichtung bekannt, die breitbandige Pulse mit niedriger Pulswiederholfrequenz aussendet und die empfangenen Signale einer Pulskompression unterzieht und danach abtastet. Für jeden Empfangsbereich und jede erwartete Geschwindigkeit werden bestimmte Pulse des Sendesignals hinsichtlich der Abstandsveränderung ausgewertet. Hieraus wird der Abstand und die eindeutige Geschwindigkeit der detektierten Ziele bestimmt.

Aufgabe, Lösung und Vorteile der Erfindung

Der vorliegenden Erfindung liegt die Aufgabe zugrunde, ein Verfahren und eine Vorrichtung für ein Radarsystem anzugeben, mit dem Objekte im Sensorerfassungsbereich in Abhängigkeit einer virtuellen Barriere ausgewertet werden.

Erfindungsgemäß wird dieses durch die Merkmale der unabhängigen Ansprüche gelöst. Vorteilhafte Weiterbildungen und Ausgestaltungen ergeben sich aus den Unteransprüchen.

Nach einer Bewertung der mit einem Radarsensor erfassten Ziele hinsichtlich ihres Gefährdungspotentials werden hier der Abstand und die Geschwindigkeit sowie ggf. auch die Beschleunigung relativ zum Zielobjekt gemessen. Mit der erfindungsgemäßen adaptiven Gestaltung der Abmessungen der virtuellen Barriere wird der Messvorgang in Bezug auf die Messgenauigkeit, die Ortsauflösung und das Signal/RauschVerhältnis in vorteilhafter Weise optimiert.

Bei einer bevorzugten Ausführungsform des erfindungsgemäßen Verfahrens wird unter Ausnutzung eines Sendesignals eines Puls-Radarsensors das vom Zielobjekt reflektierte Empfangssignal in mindestens zwei Empfangskanälen derart ausgewertet, dass unterschiedliche Ortsauflösungen und unterschiedliche Abmessungen hinsichtlich Entfernung und Länge der virtuellen Barriere erreicht werden.

In einem ersten Empfangskanal wird das Empfangssignal zur Erfassung der Entfernung der Zielobjekte mit einem Referenzsignal mit fest eingestellter Pulsdauer $\tau_S$ entsprechend dem Sendesignal verarbeitet. In einem zweiten Empfangskanal wird in vorteilhafter Weise das Empfangssignal mit einem Referenzsignal mit veränderlicher Pulsdauer $\tau_R$ entweder zur Messung der Entfernung bei veränderlicher Ortsauflösung oder zur Einstellung der Länge $\Delta x_{VB}$ der virtuellen Barriere verarbeitet.

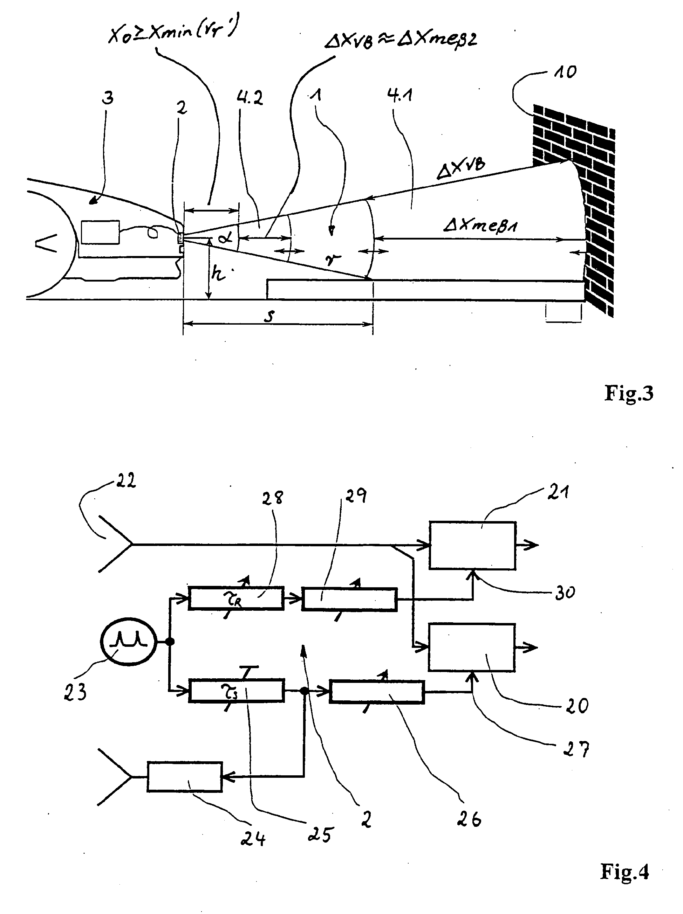

Besonders vorteilhaft lässt sich das erfindungsgemäße Verfahren ausführen, wenn die im Unteranspruch 4 angegebenen Verfahrensschritte a) bis d) ausgeführt werden, die anhand der Figur 3 der Zeichnung bei der Erläuterung des Ausführungsbeispiels auch in ihren mathematischen Zusammenhängen beschrieben sind. Weiterhin lässt sich das erfindungsgemäße Verfahren vorteilhaft weiterbilden, wenn auch die Merkmale der auf den Unteranspruch 4 zurückbezogenen Unteransprüche ausgeführt werden.

Eine besonders vorteilhafte Vorrichtung zur Durchführung des erfindungsgemäßen Verfahrens ist im Vorrichtungsanspruch 10 und den darauf zurückbezogenen weiteren Vorrichtungsansprüchen angegeben, bei der ein Puls-Radarsensor mit insbesondere einem ersten Empfangskanal zur Entfernungsmessung und einem zweiten Empfangskanal zur Einstellung der virtuellen Barriere im zuvor beschriebenen Sinne aufgebaut ist.

Die gemäß der Erfindung mögliche adaptive Einstellung der Länge $\Delta x_{VB} \approx \Delta x_{mess}$ der virtuellen Barriere erlaubt auf einfache Weise eine Optimierung des Wertes für $\Delta x_{mess}$ in bezug auf die Meßgenauigkeit, die Ortsauflösung und das Signal/Rausch-Verhältnis. Es werden, bei hoher Relativgeschwindigkeit zum Fahrzeug, Zielobjekte mit geringerem Reflexionsquerschnitt erkannt, da in diesem Fall ein größerer Wert für die Länge der virtuellen Barriere verwendet wird.

Die Einstellung eines möglichst geringen Abstandes der virtuellen Barriere zum Radarsensor mit einem möglichst geringem Wert für die Länge $\Delta x_{VB}$ besitzt gegenüber größeren Werten für den Abstand folgende Vorteile:

- Bewegen sich das Fahrzeug und das Zielobjekt aneinander vorbei, so ist die Wahrscheinlichkeit, dass sich ein Zielobjekt mit einer hohen Relativgeschwindigkeit durch die virtuellen Barriere bewegt, geringer; Fehlauslösungen bzw. Fehlmessungen werden dadurch weniger wahrscheinlich.

- Das Signal/Rausch-Verhältnis ist bei einem geringerem Abstand des Zielobjekts zum Radarsensor größer und erlaubt auch die Detektion bzw. Messung von Zielobjekten mit geringerem Reflexionsquerschnitt.

- Weiterhin ist es auch vorteilhaft, dass niedrige Zielobjekte, die nicht erkannt werden sollen, wie z.B. Bordsteinkanten, vom Radarsensor in Abhängigkeit von ihrer Höhe bei geringeren Werten für $\Delta x_{VB}$ oder $\Delta x_{mess}$, der Einbauhöhe des Radarsensors und dem horizontalen Öffnungswinkel der Radarsendeantenne bzw. der Empfangsantenne nicht erfasst werden.

Der Zeitpunkt der Messung kann beim erfindungsgemäßen Verfahren in vorteilhafter Weise relativ zum Zeitpunkt der zu erwartenden Kollision des Fahrzeugs mit dem Zielobjekt entsprechend den Erfordernissen der Anwendungen gewählt werden.

Zeichnung

Ein erfindungsgemäßes Verfahren und eine Vorrichtung zur Erfassung und Auswertung von Objekten im Umgebungsbereich eines Fahrzeuges wird anhand der Ausführungsbeispiele in der Zeichnung erläutert.
Es zeigen:

Figur 1 eine Skizze eines Überwachungsbereichs eines Radarsensors im Frontbereich eines Fahrzeugs mit einer virtuellen Barriere für die Erfassung und Auswertung eines Zielobjekts;

Figur 2 eine Skizze eines Überwachungsbereichs mehrerer Radarsensoren an einem Fahrzeug mit einer virtuellen Barriere entsprechend der Figur 1;

Figur 3 eine Skizze des Überwachungsbereichs nach den vorhergehenden Figuren im seitlichen Schnitt und

Figur 4 ein Blockschaltbild eines Puls-Radarsensors mit dem die adaptive Einstellung der virtuellen Barriere durchführbar ist.

Beschreibung der Ausführungsbeispiele

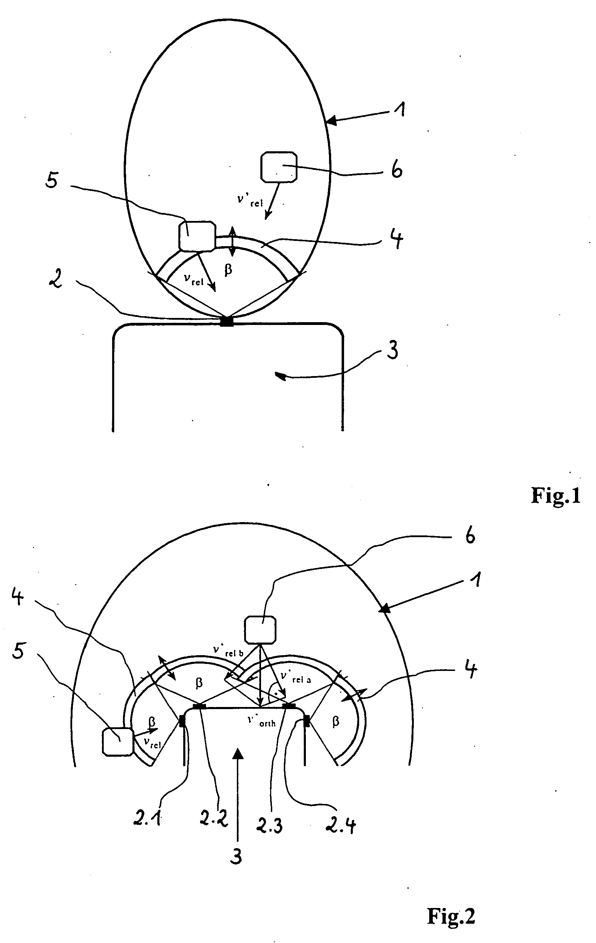

In Figur 1 ist skizzenhaft ein Überwachungsbereich 1 eines Radarsensors 2 im Frontbereich eines Fahrzeugs 3 gezeigt, der mit einer virtuellen Barriere 4 versehen ist, die anhand der nachfolgenden Figuren noch näher erläutert wird. Der Radarsensor 2 ist zur Erfassung und Auswertung von hier nur beispielhaft angegebenen Zielobjekten 5 und 6 im Überwachungsbereich 1 hinsichtlich ihres Abstandes zum Fahrzeug 3 und insbesondere auch hinsichtlich ihrer Relativgeschwindigkeit $v_{rel}$ bzw. $v'_{rel}$ zum Fahrzeug 3 vorhanden.
Nach der erfindungsgemäßen Ausführung des vorgeschlagenen Verfahrens zur Auswertung des Überwachungsbereiches 1 wird eine adaptiv, in der mit einem Pfeil angegebenen Richtung, steuerbaren virtuelle Barriere 4 eingerichtet, die mit einem geeignetem Abstand zum Radarsensor 2 versehen ist und in der der zu messende Abstandsbereich $x_{mess}$ erfasst werden kann.
Die virtuelle Barriere 4 stellt hier einen Teilbereich des Überwachungsbereichs 1 dar und kann schon mit Hilfe eines einzelnen Radarsensors 2 mit dem horizontalen Öffnungswinkel $\beta$ realisiert werden.
In Abänderung zu der Skizze nach der Figur 1 sind in Figur 2 eine Mehrzahl von Radarsensoren 2.1, 2.2, 2.3 und 2.4 im Frontbereich des Fahrzeugs 3 und auch seitlich angeordnet. Hierbei ist zu erkennen, dass insbesondere das Zielobjekt 6 vom Radarsensor 2.2 mit einer Relativgeschwindigkeit $v'_{rel/b}$ und vom Radarsensor 2.3 mit einer Relativgeschwindigkeit $v'_{rel/a}$ erfasst wird. Zur Front des Fahrzeugs 3 ergibt sich damit eine orthogonale Relativgeschwindigkeit $v'_{orth}$.
Anhand der Skizze nach Figur 3 ist in einer seitlichen Darstellung des Überwachungsbereichs 1 gezeigt, dass die adaptiv steuerbare virtuelle Barriere 4 so eingerichtet werden kann, dass sie für bestimmte Situationen mit einem geeignetem Abstand zum Radarsensor 2 und mit einer geeigneten Länge $x_{mess}$ versehen wird. Beispielsweise ist hier eine virtuelle Barriere 4.1 für eine hohe Geschwindigkeit im weiter entfernten Bereich zur Messung des Abstandes innerhalb $\Delta x_{mess1}$ und eine virtuelle Barriere 4.2 für eine relativ geringe Geschwindigkeit im Nahbereich zur Messung des Abstandes innerhalb $\Delta x_{mess2}$ gezeigt.
Die Bestimmung der räumlichen Abmessungen der virtuellen Barrieren 4.1 oder 4.2 und der Ablauf der Messvorgänge für den Abstand und die Geschwindigkeiten können dabei in folgenden Verfahrensschritten vorgenommen werden:

a) Im Überwachungsbereich 1 werden zunächst bei vorhandenen Zielobjekten (hier z.B. die Wand 10) Abstandsmessungen durchgeführt. Aus den Werten für die Zielabstände werden die Relativgeschwindigkeit $v'_{rel}$ und ggf. die Beschleunigung $a'_{rel}$ des Fahrzeugs 3 relativ zum jeweiligen Zielobjekt ermittelt.

b) Anschließend wird ein Zeitintervall $t_0$ festgelegt, das notwendig ist, um eine Signalverarbeitung anhand der Messwerte, eine Datenübertragung und eine Steuerung der betreffenden Anwendungen im Kraftfahrzeug (z.B. das Umschalten der Sicherheitsstufen im Airbag, das Auslösen der Gurtstraffer etc.) zu realisieren. Das Zeitintervall $t_0$ kann dabei auch als eine Funktion der Relativgeschwindigkeit $v'_{rel}$ und/oder der Beschleunigung $a'_{rel}$ festgelegt werden.

c) Ausgehend von dem bisher ermittelten Werten kann nun der minimal notwendige Abstand $x_{min}$ der virtuellen Barriere 4.1 oder 4.2 zum Radarsensor 2 nach folgender Beziehung ermittelt werden:

$$x_{min} = v'_{rel} * t_0 + a'_{rel} * t_0^2/2 \quad (1).$$

Die Entfernung $X_0$ der virtuellen Barriere 4.1 oder 4.2 zum Radarsensor 2 wird hier so gewählt, dass diese den Wert von $x_{min}$ nicht unterschreitet.

d) Bei einer Annäherung des Zielobjekts 10 wird der momentane Zielabstand mit dem Wert der Summe $x_{min} + \Delta x_{mess}$ verglichen. Ist der momentane Abstand zum Ziel 10 kleiner als $x_{min} + \Delta x_{mess}$ dann erfolgt hier eine Geschwindigkeitserfassung durch eine Messung der Dopplerfrequenz $f_d$ innerhalb der virtuellen Barriere 4.1 bzw. 4.2 mit einer Meßzeit $t_{mess}$. Die Länge $\Delta x_{VB}$ der virtuellen Barriere 4.1 bzw. 4.2 wird dann dem Wert aus der folgenden Beziehung angenähert:

$$\Delta x_{VB} \approx \Delta x_{mess} = v'_{rel} * t_{mess} + a'_{rel} * t_{mess}^2/2 \quad (2).$$

Die Meßzeit $t_{mess}$ kann dabei auch eine Funktion der Relativgeschwindigkeit $v'_{rel}$ und/oder der Beschleunigung $a'_{rel}$ sein.

e) Die Ermittlung der Relativgeschwindigkeit mit Hilfe der Dopplerfrequenz $f_d$ geht von der bekannten Beziehung

$$f_d = f_0 * 2\ v_{rel} / (c - v_{rel}) (3) \text{ aus.}$$

Hierbei sind:

c = die Lichtgeschwindigkeit im betreffenden Medium,

$f_0$ = die Oszillatorfrequenz und

$v_{rel}$ = die Relativgeschwindigkeit zwischen Sensor und Zielobjekt.

Daraus abgeleitet kann die Relativgeschwindigkeit nach folgender Formel berechnet werden:

$$v_{rel} = f_d * c / (f_d + 2*f_0) (4).$$

f) Insbesondere wenn bei den vorausgegangenen Berechnungen sich ergibt, dass $v_{rel} \neq v'_{rel}$ (vgl. Zielobjekte 5 und 6 aus der Figur 1) ist, so können die Schritte c) bis e) mit entsprechend $v_{rel}$ angepassten Werten für den Abstandsbereich $\Delta x_{VB} \approx \Delta x_{mess}$ und für $x_{min}$ wiederholt werden. Somit kann man einen zweiten auf der Messung der Dopplerfrequenz $f_d$ basierenden Wert für die Relativgeschwindigkeit $v_{rel2}$ gewinnen, der gegebenenfalls anstelle des ersten Meßwertes $v_{rel1}$ verwendet wird. Aus den beiden Werten für die Relativgeschwindigkeit kann dann auch gegebenenfalls die Beschleunigung $a_{rel}$ berechnet werden. Auch eine Erweiterung des Verfahrens mit n-facher Wiederholung der Schritte a) bis e) und nachfolgender Auswertung der Messwerte $v_{rel1}$ bis $v_{reln}$ ist hier möglich.

g) Wenn nun die Relativbeschleunigungen $a_{rel}$ oder $a'_{rel}$ gemessen worden sind, so kann man die Geschwindigkeit $v_c$ für den Zeitpunkt der Kollision mit

$$v_c = v_{rel} + a_{rel} * t_{mess} \quad (5) \quad oder \quad v_c = v_{rel} + a'_{rel} * t_{mess} \quad (6)$$

genauer berechnen. Im anderen Fall gilt auch hier $v_c = v_{rel}$.

Alternativ zum Verfahrensschritt a) kann die Ermittlung der Relativgeschwindigkeit $v'_{rel}$ und ggf. $a'_{rel}$ auch durch eine zyklische Überwachung einer virtuellen Barriere 4.1 bzw. 4.2 erfolgen, die anhand der folgenden Beziehungen (1) und (2) mit den Werten

$$x_{min} = v'_{rel\,max} * t_0 + a'_{rel\,max} * t_0^2/2 \quad (1.1)$$

und

$$\Delta x_{VB} \approx \Delta x_{mess} = v'_{rel\,max} * t_{mess} + a'_{rel\,max} * t_{mess}^2/2 \quad (2.1)$$

erfolgt.

Hierbei sind die Werte $v'_{rel\,max}$ und $a'_{rel\,max}$ Maximalwerte, d.h. sog. Messbereichsendwerte für die relative Geschwindigkeit und die relative Beschleunigung zwischen Fahrzeug 3 und Zielobjekt 10. Wird ein Zielobjekt 10 innerhalb dieser virtuellen Barriere erkannt, dann erfolgt der weitere Ablauf des Messverfahrens entsprechend der Punkte b) bis g), d.h. es erfolgt eine weitere Messung innerhalb einer neu dimensionierten virtuellen Barriere 4.1 oder 4.2.

Bei einer Vergrößerung des Wertes für $\Delta x_{mess}$ ist eine genauere Messung der Relativgeschwindigkeit und Beschleunigung bei einem größerem Signal/Rausch-Verhältnis, insbesondere an Zielen mit hoher Geschwindigkeit und geringem Reflexionsquerschnitt, durchführbar. Ein möglichst kleiner Wert für $\Delta x_{mess}$ ist jedoch notwendig, um eine möglichst hohe Ortsauflösung zu erhalten. Der Wert für $\Delta x_{mess}$ ist folglich ein Kompromiss aus unterschiedlichen eventuell auch gegensätzlichen Anforderungen.

Ein Ausführungsbeispiel einer Schaltungsanordnung zum Aufbau eines Radarsensors 2, mit dem ein adaptives Messverfahren mit den zuvor beschriebenen Verfahrensschritten durchführbar ist, wird anhand des Blockschaltbildes nach Figur 4 erläutert. Obwohl anhand des im folgenden beschriebenen Ausführungsbeispiels von einem Pulsradar ausgegangen wird, ist das erfindungsgemäße Verfahren auch in adäquater Weise mit einem FMCW-Radar durchführbar.

Generell erfolgt die Änderung der Länge der virtuellen Barriere 4, 4.1 oder 4.2 bei einem Pulsradar z.B. durch eine Änderung der Pulsdauer oder Burstdauer des gesendeten Signals und/oder der Pulsdauer des zur Kreuzkorrelation (Mischung) mit dem empfangenen Signal verwendeten Referenzsignals. Die Lage der virtuellen Barriere 4, bzw. 4.1 oder 4.2, ist dagegen beim Pulsradar durch die zeitliche Verzögerung des Referenzsignals gegenüber dem gesendeten Signal einstellbar.

Es sind beim Blockschaltbild nach der Figur 4 zwei Empfangskanäle 20 und 21 mit einer Antenne 22, bzw. auch mit einer zweiten nicht dargestellten Antenne für den Kanal 21, vorhanden. Es ist ein Pulsgenerator 23 angeordnet, der den Trägerpuls für das Radarsignal liefert, das von einem Oszillator als Radarsender 24 erzeugt wird.

In einem Zweig für den ersten Empfangskanal 20 ist eine erste Pulsdauereinstellung 25 für die Pulsdauer $\tau_S$ vorhanden, mit der auch das vom Radarsender 24 gesendete Signal beaufschlagt wird. Das so eingestellte Pulssignal am Ausgang der Pulsdauereinstellung 25 wird über eine Verzögerung 26 als Referenzsignal für die Entfernungsmessung der Zielobjekte 5, 6 oder 10 auf einen Pulseingang 27 des ersten Empfangskanals 20 geführt. Die Pulsdauer $\tau_S$ im ersten Empfangskanal 20 wird damit konstant eingestellt und entspricht der Pulsdauer des Signals des Radarsenders 24. Dadurch erhält man ein Maximum für das Signal/RauschVerhältnis (S/N), wodurch dieser Empfangskanal 20 für die Entfernungsmessung mit hoher Ortsauflösung verwendet wird.

In einem zweiten Zweig hinter dem Pulsgenerator 23 ist eine kontinuierlich oder diskret veränderbare Pulsdauereinstellung 28 für die Pulsdauer $\tau_R$ und daran anschließend auch eine Verzögerung 29 vorhanden, wobei dieses Pulssignal als Referenzsignal für die Einstellung der Länge und Lage der virtuellen Barriere 4, 4.1 oder 4.2 auf einen Pulseingang 30 des zweiten Empfangskanals 21 geführt ist. Im zweiten Empfangskanal 21 ist damit mit der Pulsdauereinstellung 28 die Pulsdauer $\tau_R$ des Referenzsignals verstellbar, wodurch dieser Kanal 21 auch zur Messung der

**EP 1 157 287 B1**

Relativgeschwindigkeit zwischen dem Fahrzeug 3 und den Zielobjekten 5, 6 oder 10 innerhalb einer adaptiv veränderbaren virtuellen Barriere 4, 4.1, 4.2 dient.

Beide Empfangskanäle 20 und 21 gestatten somit auch eine voneinander unabhängige Einstellung der Verzögerung für den jeweiligen Puls des Referenzsignals an den Eingängen 27 und 30 der beiden Empfangskanäle 20 und 21. Die unterschiedlichen Werte für $\tau_R$ und $\tau_S$ bewirken im zweiten Empfangskanal 21 eine Verringerung des Signal/Rausch-Verhältnisses S/N, was insbesondere für eine Messung der Relativgeschwindigkeit im Nahbereich (virtuelle Barriere 4.2 nach der Figur 3) toleriert werden kann.

Die Demodulation der Pulsradar-Signale in den Empfangskanälen 20 und 21 erfolgt hier mit, für sich gesehen aus dem Stand der Technik bekannten Mischertechniken, mit denen ein sog. I- und Q-Signal eines I/Q-Mischers ( = Inphase-Quadrat-Mischer) zur weiteren Verarbeitung erzeugt wird. Jeder Empfangskanal 20 oder 21 kann dabei beide Signale (I und Q) oder nur ein Signal (I oder Q) enthalten. Für eine Kreuzkorrelation im Mischer des Empfangskanals 21 wird, wie zuvor erwähnt, die Pulsdauer $\tau_R$ verwendet. Die Länge $\Delta x_{VB}$ der virtuellen Barriere 4, 4.1, 4.2 errechnet sich damit zu

$$\Delta x_{VB} \; = \; (\tau_R \; + \; \tau_S \;) c/2 \qquad (7).$$

Diese Länge $\Delta x_{VB}$ wird erfindungsgemäß durch eine entsprechende Veränderung der Pulsdauer $\tau_R$ des Referenzsignals am Eingang 30 des zweiten Empfangskanals 21 eingestellt. Da $\tau_S$ konstant ist, wird die Messung im ersten Empfangskanal 20 nicht beeinflusst.

Die hier beschriebenen Ausführungsbeispiele können insbesondere hinsichtlich der Anzahl der Empfangskanäle oder -zweige und der gemeinsam oder separat verwendeten Empfängerbausteine verändert werden ohne die erfindungsgemäße Funktion im wesentlichen zu verändern. Ein von den dargestellten Ausführungsbeispielen abweichende Kombination von sequentieller und paralleler Auswertung von Entfernung und Geschwindigkeit in einem oder mehreren Empfangskanälen ist ebenfalls möglich.

**Patentansprüche**

1. Verfahren zur Erfassung und Auswertung von Objekten im Umgebungsbereich eines Fahrzeugs (3), bei dem mit mindestens einem Radarsensor (2) die Zielobjekte (5, 6; 10) in einem Überwachungsbereich (1) erfasst und in mindestens einer Auswerteeinheit die Entfernungs- und/oder Geschwindigkeitsdaten der Zielobjekte (5, 6; 10) ausgewertet werden, wobei die Erfassung der Relativgeschwindigkeit der Zielobjekte innerhalb einer in der Entfernung $x_0$ vom Fahrzeug (3) und in ihrer Länge $\Delta x_{VB}$ veränderbaren virtuellen Barriere (4; 4.1, 4.2) erfolgt, **dadurch gekennzeichnet, dass** die virtuelle Barriere (4; 4.1, 4.2) für eine hohe Relativgeschwindigkeit einen größeren Abstand zum Fahrzeug (3) und für eine geringere Relativgeschwindigkeit einen kleineren Abstand zum Fahrzeug (3) aufweist und dass die Länge $\Delta x_{VB}$ der virtuellen Barriere (4; 4.1, 4.2) nach der Beziehung

$$\Delta x_{VB} \approx \Delta x_{mess} = v'_{rel} * t_{mess} + a'_{rel} * t_{mess}^2/2$$

erfolgt, wobei $v'_{rel}$ die Relativgeschwindigkeit des Zielobjekts (5,6,10) bezüglich des Fahrzeugs (3), $t_{mess}$ die Messzeit der Relativgeschwindigkeitserfassung durch eine Messung der Dopplerfrequenz $f_d$ innerhalb der virtuellen Barriere und $a'_{rel}$ die relative Beschleunigung des Zielobjekts (5,6,10) bezüglich des Fahrzeugs (3) ist.

2. Verfahren nach Anspruch 1, **dadurch gekennzeichnet,**

 - **dass** in einem ersten Empfangskanal (20) das Empfangssignal mit einem Referenzsignal mit fest eingestellter Pulsdauer ($\tau_S$) entsprechend dem Sendesignal zur Erfassung der Entfernung der Zielobjekte (5,6;10) oder zur Einstellung der Entfernung $x_0$ der virtuellen Barriere (4;4.1,4.2) verarbeitet wird und
 **dass** in einem zweiten Empfangskanal (21) das Empfangssignal mit einem Referenzsignal mit veränderlicher Pulsdauer ($\tau_R$) zur Einstellung der Länge $\Delta x_{VB}$ der virtuellen Barriere (4;4.1,4.2) oder zur Erfassung der Zielobjekte (5,6;10) mit veränderter Ortsauflösung oder in einem anderen Entfernungsbereich verarbeitet wird.

3. Verfahren nach einem der vorhergehenden Ansprüche, **dadurch gekennzeichnet, dass** folgende Verfahrensschritte durchgeführt werden:

a) im Überwachungsbereich (1) werden eine Erfassung des Abstands und der Relativgeschwindigkeit $v'_{rel}$ und ggf. der Beschleunigung $a'_{rel}$ des Fahrzeugs (3) relativ zum jeweiligen Zielobjekt (5,6;10) vorgenommen,

b) es wird ein Zeitintervall ($t_0$) zur Messwertverarbeitung, Datenübertragung und Steuerung der betreffenden Anwendung vorgegeben,

c) es werden der notwendige Abstand $x_{min}$ der virtuellen Barriere (4;4.1,4.2) zum Radarsensor (2) und die Länge des Messbereichs $x_{mess}$ ermittelt, wobei die Entfernung $x_0$ der virtuellen Barriere (4;4.1,4.2) zum Radarsensor (2) so gewählt wird, dass diese den minimalen Wert $x_{min}$ nicht unterschreitet,

d) wenn der momentane Zielabstand des Zielobjekts (5,6;10) kleiner als die Summe $x_{min} + \Delta x_{mess}$ ist, erfolgt hier eine Relativgeschwindigkeits- und Beschleunigungserfassung ($V_{rel}, V'_{rel}, a_{rel}, a'_{rel}$) durch eine Messung der Dopplerfrequenz ($f_d$) innerhalb der virtuellen Barriere (4;4.1,4.2) mit der Meßzeit $t_{mess}$.

4. Verfahren nach Anspruch 3, **dadurch gekennzeichnet, dass** das Zeitintervall ($t_0$) als eine Funktion der Relativgeschwindigkeit $v'_{rel}$ und/oder der Beschleunigung $a'_{rel}$ festgelegt wird.

5. Verfahren nach Anspruch 3 oder 4, **dadurch gekennzeichnet, dass** die Schritte c) und d) mit jeweils neu berechneten Werten für die Länge der virtuellen Barriere $\Delta x_{VB}$ und für den minimalen Abstand $x_{min}$ zur Erfassung mehrerer Abstands- und Relativgeschwindigkeitsbereiche mehrfach wiederholt werden.

6. Verfahren nach Anspruch 3, 4 oder 5, **dadurch gekennzeichnet, dass** in dem Fall, wenn bei den vorausgegangenen Berechnungen sich ergibt, dass die zweite Messung der Relativgeschwindigkeit $v_{rel}$ eines Zielobjekts (5) kleiner ist als die erste Messung der Relativgeschwindigkeit $v'_{rel}$ des gleichen Zielobjekts, die Schritte c) und d) nach dem Anspruch 3 mit geringeren Werten für den Abstandsbereich ($\Delta x_{VB} \approx \Delta x_{mess}$) und für den minimalen Abstand $x_{min}$ wiederholt werden.

7. Verfahren nach Anspruch 3, 4, 5 oder 6, **dadurch gekennzeichnet, dass** aus den Relativbeschleunigungen ($a_{rel}$, $a'_{rel}$) zwischen den Zielobjekten (5,6;10) und dem Fahrzeug (3) die Geschwindigkeit $v_c$ für den Zeitpunkt einer Kollision nach der Beziehung

$$v_c = v_{rel} + a_{rel} * t_{mess} \text{ bzw. } v_c = v_{rel} + a'_{rel} * t_{mess}$$

berechnet wird.

8. Verfahren nach einem der vorhergehenden Ansprüche, **dadurch gekennzeichnet, dass** folgende Verfahrensschritte durchgeführt werden:

- die Messung der Entfernung der im Überwachungsbereich vorhandenen Zielobjekte (5,6;10) wird in einem oder mehreren Empfangskanälen durchgeführt,
- es werden die für eine Anwendung relevanten Zielobjekte (5,6;10) ausgewählt,
- die Relativgeschwindigkeit der ausgewählten Zielobjekte (5,6;10) wird durch Auswertung der Dopplerfrequenz innerhalb der jeweiligen virtuellen Barriere (4;4.1,4.2) in einem oder mehreren Empfangskanälen gleichzeitig zu weiteren Entfernungsmessungen in den dafür verwendeten Empfangskanälen durchgeführt.

9. Vorrichtung derart ausgebildet ist, dass das Verfahren nach einem der vorhergehenden Ansprüche, durchgeführt wird, wobei ein Puls-Radarsensor (2) einen ersten Empfangskanal (20) zur Entfernungsmessung, und weitere Empfangskanäle (21) zur Einstellung der virtuellen Barriere (4;4.1,4.2), sowie einen Pulsgenerator (23) zur Erzeugung von modulierten Trägerpulsen für das Signal eines Radarsenders (24) und die Demodulation in den Empfangskanälen (20,21) aufweist.

10. Vorrichtung nach Anspruch 9, **dadurch gekennzeichnet, dass** für den ersten Empfangskanal (20) eine erste Pulsdauereinstellung (25) für die Pulsdauer ($\tau_S$) vorhanden ist, mit der auch das Signal des Radarsenders (24) beaufschlagt wird und über eine Verzögerung (26) als Referenzsignal, vorzugsweise für die Entfernungsmessung, auf einen Pulseingang (27) des ersten Empfangskanals (20) geführt ist und dass für den zweiten Empfangskanal (21) eine kontinuierlich oder direkt veränderbare Einstellung (28) für die Pulsdauer ($\tau_R$) und eine Verzögerung (29) vorhanden ist, wobei dieses Pulssignal, vorzugsweise als Referenzsignal, für die Einstellung der Länge und des Abstandes der virtuellen Barriere (4;4.1,4.2) oder die Entfernungsmessung mit einer veränderlichen Ortsauflösung auf einen Pulseingang (30) des zweiten Empfangskanals (21) geführt ist.

**11.** Vorrichtung nach Anspruch 9 oder 10, **dadurch gekennzeichnet, dass** ein I/Q-Mischer zur Mischung des Sendesignals und des von einer Empfangsantenne (22) gelieferten Signals im jeweiligen Empfangskanal (20,21) vorgesehen ist.

**12.** Vorrichtung nach einem der Ansprüche 9 bis 11, **dadurch gekennzeichnet, dass** die Auswertung des empfangenen Radarsignals in einem oder mehreren der Empfangskanälen durch eine Kombination zeitlich sequentieller und/oder zeitlich paralleler Auswertung in den Empfangskanälen ausgeführt wird.

**Claims**

**1.** Method for detecting and evaluating objects in the surrounding area of a vehicle (3), in the case of which the target objects (5, 6; 10) are detected in a monitoring area (1) with the aid of at least one radar sensor (2), and the distance data and/or speed data of the target objects (5, 6; 10) are evaluated in at least one evaluation unit, the detection of the relative speed of the target objects being performed inside a virtual barrier (4; 4.1, 4.2) which can be varied in the distance $x_0$ from the vehicle (3) and in its length $\Delta x_{VB}$, **characterized in that** the virtual barrier (4; 4.1, 4.2) has a relatively large distance from the vehicle (3) for a high relative speed, and a relatively small distance from the vehicle (3) for a relatively low relative speed, and **in that** the length $\Delta x_{VB}$ of the virtual barrier (4; 4.1, 4.2) satisfies the relationship

$$\Delta x_{VB} \approx \Delta x_{mess} = v'_{rel} * t_{mess} + a'_{rel} * t_{mess}^2/2,$$

$v'_{rel}$ being the relative speed of the target object (5, 6, 10) with reference to the vehicle (3), $t_{mess}$ being the measuring time for the detection of the relative speed from a measurement of the Doppler frequency $f_d$ inside the virtual barrier, and $a'_{rel}$ being the relative acceleration of the target object (5, 6, 10) with reference to the vehicle (3).

**2.** Method according to Claim 1, **characterized**

- **in that** in a first reception channel (20) the received signal is processed with a reference signal having a permanently set pulse duration ($\tau_S$) in accordance with the transmitted signal in order to detect the distance of the target objects (5, 6; 10) or to set the distance $x_0$ of the virtual barrier (4; 4.1, 4.2), and
**in that** in a second reception channel (21) the received signal is processed with a reference signal having a variable pulse duration ($\tau_R$) in order to set the length $\Delta x_{VB}$ of the virtual barrier (4; 4.1, 4.2), or to detect the target objects (5, 6; 10) with a changed spatial resolution or in another distance range.

**3.** Method according to one of the preceding claims, **characterized in that** the following method steps are carried out:

a) the distance and the relative speed $v'_{rel}$ and, if appropriate, the acceleration $a'_{rel}$ of the vehicle (3) relative to the respective target object (5, 6; 10) are detected in the monitoring area (1),
b) a time interval ($t_0$) is prescribed for processing measured values, data transmission and controlling the relevant application,
c) the required distance $x_{min}$ of the virtual barrier (4; 4.1, 4.2) from the radar sensor (2), and the length of the measuring range $x_{mess}$ are determined, the distance $x_0$ of the virtual barrier (4; 4.1, 4.2) from the radar sensor (2) being selected so as not to undershoot the minimum value $x_{min}$, and
d) when the instantaneous target distance of the target object (5, 6; 10) is smaller than the sum $x_{min} + \Delta x_{mess}$, the relative speed and acceleration ($v_{rel}$, $v'_{rel}$, $a_{rel}$, $a'_{rel}$) are detected by measuring the Doppler frequency ($f_d$) inside the virtual barrier (4; 4.1, 4.2) with the measuring time $t_{mess}$.

**4.** Method according to Claim 3, **characterized in that** the time interval ($t_0$) is determined as a function of the relative speed $v'_{rel}$ and/or the acceleration $a'_{rel}$.

**5.** Method according to Claim 3 or 4, **characterized in that** the steps c) and d) are repeated several times with respectively newly calculated values for the length of the virtual barrier $\Delta x_{VB}$ and for the minimum distance $x_{min}$ in order to detect a number of ranges of distance and relative speed.

**6.** Method according to Claim 3, 4 or 5, **characterized in that** in the case when the result of the preceding calculations is that the second measurement of the relative speed $v_{rel}$ of a target object (5) is smaller than the first measurement of the relative speed $v'_{rel}$ of the same target object, steps c) and d) in accordance with Claim 3 are repeated with smaller values for the distance range ($\Delta x_{VB} \approx \Delta x_{mess}$) and for the minimum distance $x_{min}$.

**7.** Method according to Claim 3, 4, 5 or 6, **characterized in that** the speed $v_c$ for the instant of a collision is calculated from the relative accelerations ($a_{rel}$, $a'_{rel}$) between the target objects (5, 6; 10) and the vehicle (3) in accordance with the relationship

$$\texttt{v}_{\texttt{c}} \ = \ \texttt{v}_{\texttt{rel}} \ + \ \texttt{a}_{\texttt{rel}} \ * \ \texttt{t}_{\texttt{mess}} \ \text{or} \ \texttt{v}_{\texttt{c}} \ = \ \texttt{v}_{\texttt{rel}} \ + \ \texttt{a}'_{\texttt{rel}} \ * \ \texttt{t}_{\texttt{mess}}.$$

**8.** Method according to one of the preceding claims, **characterized in that** the following method steps are carried out:

- the measurement of the distance of the target objects (5, 6; 10) present in the monitoring area is carried out in one or more reception channels,
- relevant target objects (5, 6; 10) are selected for an application, and
- by evaluating the Doppler frequency inside the respective virtual barrier (4; 4.1, 4.2) the relative speed of the selected target objects (5, 6; 10) is determined in one or more reception channels simultaneously with further distance measurements in the reception channels used therefor.

**9.** Device which is designed in such a way that the method according to one of the preceding claims is carried out, in which case a pulsed radar sensor (2) has a first reception channel (20) for distance measurement, and further reception channels (21) for setting the virtual barrier (4; 4.1, 4.2), as well as a pulse generator (23) for generating modulated carrier pulses for the signal of a radar transmitter (24) and the demodulation in the reception channels (20, 21).

**10.** Device according to Claim 9, **characterized in that** there is present for the first reception channel (20) a first pulse duration setting means (25) for the pulse duration ($\tau_S$), with which the signal of the radar transmitter (24) is also applied and is led via a time delay means (26) as reference signal, preferably for the distance measurement, to a pulse input (27) of the first reception channel (20), and **in that** a continuously or directly variable setting means (28) for the pulse duration ($\tau_R$) and a time delay means (29) are present for the second reception channel (21), this pulsed signal being led, preferably as reference signal, to a pulse input (30) of the second reception channel (21) for the purpose of setting the length and the distance of the virtual barrier (4; 4.1, 4.2) or of measuring distance with a variable spatial resolution.

**11.** Device according to Claim 9 or 10, **characterized in that** an I/Q mixer for mixing the transmitted signal and the signal supplied by a receiving antenna (22) is provided in the respective reception channel (20, 21).

**12.** Device according to one of Claims 9 to 11, **characterized in that** the evaluation of the received radar signal is executed in one or more of the reception channels by a combination of temporally sequential and/or temporally parallel evaluation in the reception channels.

**Revendications**

**1.** Procédé de détection et d'évaluation d'objets dans l'environnement d'un véhicule (3), dans lequel les objets cibles (5, 6; 10) sont détectés dans une zone de surveillance (1) par au moins un détecteur radar (2), les données de distance et/ou de vitesse des objets cibles (5, 6; 10) étant évaluées dans au moins une unité d'évaluation,
la détection de la vitesse relative des objets cibles s'effectuant à l'intérieur d'une barrière virtuelle (4; 4.1, 4.2) dont la distance $x_0$ du véhicule (3) et la longueur $\Delta x_{VB}$ sont variables,
**caractérisé en ce que**
la barrière virtuelle (4; 4.1, 4.2) présente une plus grande distance par rapport au véhicule (3) lorsque la vitesse relative est élevée et une plus petite distance par rapport au véhicule (3) lorsque la vitesse relative est plus basse et **en ce que** la détermination de la longueur $\Delta x_{VB}$ de la barrière virtuelle (4; 4.1, 4.2) s'effectue en appliquant l'équation

$$\Delta x_{VB} \approx \Delta x_{mess} = v'_{rel} * t_{mess} + a'_{rel} * t_{mess}^2/2$$

dans laquelle $v'_{rel}$ représente la vitesse relative de l'objet cible (5, 6, 10) par rapport au véhicule (3), $t_{mess}$ la durée de mesure de la détection de vitesse relative par mesure de la fréquence Doppler $f_d$ à l'intérieur de la barrière virtuelle et $a'_{rel}$ l'accélération relative de l'objet cible (5, 6, 10) par rapport au véhicule (3).

2. Procédé selon la revendication 1, **caractérisé en ce que**
le signal de réception reçu dans un premier canal de réception (20) est traité par un signal de référence dont la durée des impulsions ($\daleth_s$) est fixe et correspond au signal d'émission utilisé pour détecter la distance des objets cibles (5, 6; 10) ou pour régler la distance $x_0$ de la barrière virtuelle (4; 4.1, 4.2) et
**en ce que** le signal de réception reçu dans un deuxième canal de réception (21) est traité par un signal de référence en impulsions de durée ($\daleth_R$) variable pour définir la longueur $\Delta x_{VB}$ de la barrière virtuelle (4; 4.1, 4.2) ou pour détecter les objets cibles (5, 6; 10) à une résolution variable de localisation ou dans une autre plage de distance.

3. Procédé selon l'une des revendications précédentes, **caractérisé en ce que** l'on y exécute les étapes suivantes :

a) dans la zone de surveillance (1), la distance et la vitesse relative $v'_{rel}$ et éventuellement l'accélération $a'_{rel}$ du véhicule (3) par rapport à chaque objet cible (5, 6; 10) sont détectées,
b) un intervalle de temps ($t_0$) de traitement des valeurs de mesure, de transfert des données et de commande de l'application concernée est prédéterminé,
c) la distance $x_{min}$ que la barrière virtuelle (4; 4.1, 4.2) doit présenter par rapport au détecteur radar (2) et la longueur de la plage de mesure $x_{mess}$ sont déterminées, la distance $x_0$ entre la barrière virtuelle (4; 4.1, 4.2) par rapport au détecteur radar (2) sélectionnée étant telle qu'elle ne descend pas en dessous de la valeur minimale $x_{min}$ et
d) si la distance instantanée par rapport à l'objet cible (5, 6; 10) est inférieure à la somme $x_{min} + \Delta x_{mess}$, la vitesse relative et l'accélération ($v_{rel}$, $v'_{rel}$, $a_{rel}$, $a'_{rel}$) sont détectées par mesure de la fréquence Doppler ($f_d$) à l'intérieur de la barrière virtuelle (4; 4.1, 4.2) pendant la durée de mesure $t_{mess}$.

4. Procédé selon la revendication 3, **caractérisé en ce que** l'intervalle de temps ($t_0$) est défini en fonction de la vitesse relative $v'_{rel}$ et/ou de l'accélération $a'_{rel}$.

5. Procédé selon les revendications 3 ou 4, **caractérisé en ce que** les étapes c) et d) sont répétées plusieurs fois, chaque fois avec de nouvelles valeurs calculées de la longueur de la barrière virtuelle $\Delta x_{VB}$ et la distance minimale $x_{min}$ pour détecter plusieurs plages de distance et de vitesses relatives.

6. Procédé selon les revendications 3, 4 ou 5, **caractérisé en ce qu'**au cas où lors des calculs précédents, il s'avère que la deuxième mesure de la vitesse relative $v_{rel}$ d'un objet cible (5) est inférieure à la première mesure de la vitesse relative $v'_{rel}$ du même objet cible, les étapes c) et d) selon la revendication 3 sont répétées avec de plus petites valeurs de la plage de distance ($\Delta x_{VB} \approx \Delta x_{mess}$) et pour la distance minimale $x_{min}$.

7. Procédé selon les revendications 3, 4, 5 ou 6, **caractérisé en ce qu'**à partir des accélérations relatives ($a_{rel}$, $a'_{rel}$) entre les objets cibles (5, 6; 10) et le véhicule (3), on calcule la vitesse $v_c$ à l'instant d'une collision par l'équation :

$$v_c = v_{rel} + a_{rel} * t_{mess} \text{ et } v_c = v_{rel} + a'_{rel} * t_{mess}.$$

8. Procédé selon l'une des revendications précédentes, **caractérisé en ce que** l'on y exécute les étapes suivantes :

- on mesure la distance par rapport aux objets cibles (5, 6; 10) présents dans la zone de surveillance dans un ou plusieurs canaux de réception,
- on sélectionne les objets cibles (5, 6; 10) concernés dans l'application,
- on détermine la vitesse relative des objets cibles sélectionnés (5, 6; 10) par évaluation de la fréquence Doppler à l'intérieur de la barrière virtuelle (4; 4.1, 4.2) concernée, dans un ou plusieurs canaux de réception et en même temps que d'autres mesures de distance dans les canaux de réception utilisés dans ce but.

9. Dispositif configuré de manière à pouvoir mettre en oeuvre le procédé selon l'une des revendications précédentes, dans lequel un détecteur radar pulsé (2) présente un premier canal de réception (20) de mesure de distance et d'autres canaux de réception (21) de réglage de la barrière virtuelle (4; 4.1, 4.2) ainsi qu'un générateur d'impulsions (23) qui forme des impulsions porteuses modulées pour le signal d'un émetteur radar (24) et la démodulation des canaux de réception (20, 21).

10. Dispositif selon la revendication 9, **caractérisé en ce qu'**un premier réglage (25) de la durée des impulsions ($\tau_s$) appliquée également sur le signal de l'émetteur radar (24) est prévu pour le premier canal de réception (20) et est amené par un retardateur (26) comme signal de référence, de préférence pour la mesure de distance, à une entrée d'impulsion (27) du premier canal de réception (20) et **en ce qu'**un réglage (28) modifiable progressivement ou directement de la durée des impulsions ($\tau_R$) et un retardateur (29) sont prévus pour le deuxième canal de réception (21), ce signal pulsé étant amené de préférence comme signal de référence pour le réglage de la longueur et de la distance de la barrière virtuelle (4; 4.1, 4.2) ou pour la mesure de distance à résolution variable de la localisation sur une entrée d'impulsion (30) du deuxième canal de réception (21).

11. Dispositif selon les revendications 9 ou 10, **caractérisé en ce qu'**un mélangeur I/Q qui mélange le signal d'émission et le signal délivré par une antenne de réception (22) dans chaque canal de réception (20, 21) est prévu.

12. Dispositif selon l'une des revendications 9 à 11, **caractérisé en ce que** l'évaluation du signal radar reçu est réalisée dans un ou plusieurs des canaux de réception par une combinaison d'une évaluation successive ou parallèle dans les canaux de réception.

**Fig.1**

**Fig.2**

**Fig.3**

**Fig.4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4442189 A1
- EP 0685930 A1
- WO 9800728 A
- US 4739331 A
- US 5977905 A

**In der Beschreibung aufgeführte Nicht-Patentliteratur**

- **FACHBUCH A. LUDLOFF.** Handbuch Radar und Radarsignalverarbeitung. Vieweg Verlag, 1993, 2-21-2-44